# EUROPÄISCHE PATENTSCHRIFT

(11) **EP 1 470 010 B1**
(45) Veröffentlichungstag und Bekanntmachung des Hinweises auf die Patenterteilung: **25.07.2007**
(21) Anmeldenummer: 03704417.9
(22) Anmeldetag: 17.01.2003
(51) Int. Cl.: B60H 1/00

(54) **VERDAMPFERANORDNUNG**
EVAPORATOR ARRANGEMENT
DISPOSITIF D'EVAPORATION

(30) Priorität: 18.01.2002 DE 10201771
(43) Veröffentlichungstag der Anmeldung: 27.10.2004
(73) Patentinhaber: Behr GmbH & Co. KG, 70469 Stuttgart (DE)
(72) Erfinder: KAMPF, Hans, 71404 Korb (DE); TAXIS-REISCHL, Brigitte, 70499 Stuttgart (DE)
(86) Internationale Anmeldenummer: PCT/EP2003/000426
(87) Internationale Veröffentlichungsnummer: WO 2003/059665

(56) Entgegenhaltungen:
- EP-A- 1 040 946
- EP-A- 1 118 481
- EP-A- 1 134 102
- DE-A- 19 611 193
- DE-A- 19 822 173

## Beschreibung

Die Erfindung betrifft eine Anordnung mit einem Verdampfer in einer Klimaanlage, insbesondere für eine CO₂-Klimaanlage für ein Kraftfahrzeug, gemäß dem Oberbegriff des Anspruches 1, sowie eine damit ausgerüstete Klimaanlage. Die Erfindung betrifft weiterhin ein Verfahren zur Steuerung eines Abdeckelements für einen Wärmetauscher, insbesondere für eine Klimaanlage.

Heutige Kraftfahrzeuge weisen immer öfter Antriebsmotoren, wie Benzin-oder Dieselverbrennungsmotoren, auf, die eine geringe Abwärme erzeugen und somit eine geringe Wärmeleistung zur Heizung des Passagierraumes zur Verfügung stellen. Daher wird derzeit zum Teil eine zusätzliche Heizung in Form von elektrisch betriebenen PTC-Zusatzheizelementen, brennstoffbetriebenen Zusatzheizelementen oder Visko-Heizelementen in Fahrzeugklimaanlagen eingesetzt. Dies erfordert jedoch einen erhöhten Bauraumbedarf und einen erhöhten Kostenaufwand, da diese Elemente nicht unerheblich sind in Aufwand und im Preis.

Bei Kraftfahrzeugen mit einer Klimaanlage kann die Klimaanlage statt im Kühlbetriebsbereich auch in einem Wärmepumpenbetriebsbereich als Wärmepumpe betrieben werden, wenn eine zusätzliche Heizleistung benötigt wird. Dabei wird ein Wärmetauscher im Kühlbetriebsbereich als Verdampfer verwendet und im Wärmepumpenbereich als Kondensator/Gaskühler.

Diesbezüglich bestehen jedoch Bedenken hinsichtlich des Betriebs als Wärmepumpe wegen des gegebenenfalls auftretenden Flash-Fogging, also einer plötzlichen Beschlagsbildung auf den Innenseiten der Front und Seitenscheiben des Kraftfahrzeuges. Dadurch wird plötzlich und unerwartet die Sicht für den Fahrer eingeschränkt oder vermindert.

Das Flash-Fogging entsteht aufgrund der Vereisung bzw eines Ansammelns von Wasser im Bereich des Verdampfers oder des Klimageräts aufgrund eines vorherigen Betriebs der Klimaanlage zum Kühlen der Luft des Fahrzeuginnenraums und des anschließenden Betriebs der Klimaanlage als Wärmepumpe, wodurch Wasser bzw. Feuchtigkeit in den Passagierraum transportiert wird und sich an den Scheiben niederschlägt.

In der DE 198 22 173 A1 ist als nächster Stand der Technik eine Gehäusung für einen in eine Klimaanlage eines Kraftfahrzeuges einzubauenden Heizkörper beschrieben. Bei der Gehäusung sind an der Zu- und Abströmseite des Heizkörpers verstellbare Lamellen vorgesehen. Durch Schließen der Lamellen ist es möglich, den Heizkörper thermisch von der durch die Klimaanlage strömenden Luft abzukoppeln und so ein Nachheizen der Luft durch den gegebenenfalls noch heißen Heizkörper zu verhindern.

In der EP 1 134 102 A2 wird eine Klimaanlage beschrieben, bei der die den Verdampfer durchströmende und für den Innenraum eines Kraftfahrzeugs vorgesehene Frischluft - dem Verdampfer unmittelbar anschließend - in zwei getrennte Teilluftströme aufgeteilt wird. Die voneinander separierten Teilluftströme dienen zur Beaufschlagung unterschiedlicher Frischluftdüsen im Kraftfahrzeug.

In der DE 196 11 193 A1 ist eine Klimaanlage für ein Kraftfahrzeug beschrieben, bei der mit Hilfe einer linear verschiebbaren Platte ein variabler Anteil eines dem Fahrzeuginnenraum zuzuführenden Frischluftstroms durch einen in der Klimaanlage befindlichen Verdampfer hindurchgeleitet bzw. an diesem vorbei geleitet werden kann.

In der EP 1 040 946 A2 ist eine Mehrzonenklimaanlage für ein Kraftfahrzeug beschrieben, bei der sowohl Heizkörper als auch Verdampfer in unterschiedliche Teilbereiche aufgeteilt sind, wobei die jeweiligen Teilbereiche für die Versorgung unterschiedlicher, zum Innenraum eines Fahrzeugs gerichteter Auslassdüsen bestimmt ist.

In der EP 1 118 481 A1 ist eine weitere Klimaanlage beschrieben, bei der mit Hilfe einer Rolljalousieklappe ein unterschiedlicher Anteil der zur Belüftung eines Kraftfahrzeugs bestimmten Frischluft durch einen Heizkörper hindurch- bzw. an diesem vorbeigeleitet werden kann, nachdem diese den Verdampfer durchströmt hat.

In der DE 100 02 712 A1 ist schließlich eine Kraftfahrzeugklimaanlage beschrieben, bei der die für die Belüftung eines Kraftfahrzeugs bestimmte Frischluft, nachdem sie einen Verdampfer durchströmt hat, mit Hilfe von nachgeordneten Lamellenklappen in zwei Teilströme unterteilt werden kann, von denen einer direkt dem Fahrzeuginnenraum zugeführt wird, der andere zunächst durch einen Heizkörper hindurchgeleitet wird, ehe auch er dem Kraftfahrzeuginnenraum zugeführt wird.

Aufgabe der vorliegenden Erfindung ist es bei einem Einsatz der Klimaanlage, eine plötzliche Beschlagsbildung der Scheiben des Fahrzeuges durch ein Austragen von gespeichertem Wasser aus dem Klimagerät zu vermindern oder gar zu verhindern.

Erfindungsgemäß wird dies dadurch erreicht, daß zumindest ein Wärmetauscher, insbesondere Verdampfer für eine Klimaanlage für ein Kraftfahrzeug, vorgesehen ist, wobei zumindest ein Abdeckelement an- und/oder abströmseitig des Wärmetauschers vorgesehen ist, welches derart gestenert ist, dass es in zumindest einem ersten Betriebsbereich einen ersten Teil einer Stirnfläche des Wärmetauschers abdeckt und einen zweiten Teil der Stirnfläche des Wärmetauschers freigibt, und in einem zweiten Betriebsbereich den ersten Teil der Stirnfläche des Wärmetauschers freigibt und den zweiten Teil der Stirnfläche des Wärmetauschers abdeckt. Dabei ist ein Betriebsbereich ein Kühlbetriebsbereich und der zweite Betriebsbereich ein Wärmepumpenbetriebsbereich.

Auch kann es zweckmäßig sein, wenn in zumindest einem weiteren, dritten Betriebsbereich die Stirnfläche des Wärmetauschers durch das zumindest eine Abdeckelement im wesentlichen vollständig freigebbar ist. Auch kann es weiterhin zweckmäßig sein, wenn in zumindest einem weiteren, vierten Betriebsbereich die Stirnfläche des Wärmetauschers durch das zumindest eine Abdeckelement im wesentlichen vollständig abdeckbar ist.

Besonders zweckmäßig ist es, wenn die Stirnfläche des Wärmetauschers im wesentlichen in zumindest zwei Bereiche teilbar ist und zumindest ein Abdeckelement in Abhängigkeit des Betriebsbereiches zumindest einen Bereich abdeckt oder freigibt. Dazu ist das zumindest eine Abdeckelement derart ansteuerbar. Auch kann es zweckmäßig sein, wenn die Stirnfläche des Wärmetauschers in zumindest zwei Bereiche Teilbar ist, wobei eine Grenze bzw. Grenzbereich zwischen den Teilbereichen vertikal oder horizontal zu einer Referenzlinie, wie eine Seitenkante oder Seitenfläche oder ähnliches, des Wärmetauschers verläuft.

Vorteilhaft ist es, wenn zwei Teilbereiche ausgebildet sind, die nebeneinander liegen und durch eine horizontale oder vertikale Grenze bzw. einen Grenzbereich geteilt sind. In dem Grenzbereich können sich die Teilbereiche auch überlappen oder der Grenzbereich kann auch nicht Teil der Teilbereiches sein. Zweckmäßig ist es, wenn die beiden Teilbereiche hinsichtlich ihrer Fläche im wesentlichen gleich groß sind. Auch kann es zweckmäßig sein, wenn einer der Teilbereiche eine Größe im Bereich von 20 % bis 80%, vorzugsweise 30% bis 50% der Stirnfläche aufweist. Dabei können die beiden Teilbereich auch unterschiedlich groß sein.

Auch kann es zweckmäßig sein, wenn mehr als zwei, beispielsweise drei, vier oder mehr Teilbereiche gebildet werden, wobei zumindest zwei Teilbereiche im wesentlichen gleichzeitig abdeckbar oder freigebbar sind.

Gemäß eines weiteren erfindungsgemäßen Gedankens ist es zweckmäßig, wenn das zumindest eine Abdeckelement eine mittels einer Führung verschiebbares Element aufweist und/oder ein folienartiges oder filmartiges Abdeckelement und/oder eine Rolljalousie oder eine Anzahl von verdrehbaren Lamellen aufweist.

Zweckmäßig ist es, wenn Abdeckelement ein in zumindest einer Führung, vorzugsweise zwei Führungen, verschiebbares Element aufweist, welches zumindest eine Fläche aufweist, mittels welchem zumindest ein Teil des Wärmetauschers abdeckbar ist, Dabei ist es zweckmäßig, wenn das Element ein ebenes oder nicht ebenes Flächenelement ist oder aufweist.

Vorzugsweise ist es zweckmäßig, wenn das zumindest eine Element zumindest ein in zumindest einer Führung, wie Führungsschiene, lateral verschiebbares Flächenelement aufweist. Dabei kann das Flächenelement vor dem Wärmetauscher lateral verschiebbar sein. Auch kann das Flächenelement zum Beispiel an einer Ecke der Wärmetauschers aus der Ebene heraus verschiebbar sein.

Gemäß eines weiteren Erfindungsgedankens kann es zweckmäßig sein, wenn das Abdeckelement ein mittels oder auf einem Roll- oder Walzenmechanismus aufrollbares, aufwickelbares oder transportierbares oder verlagerbares folienartiges oder filmartiges Element aufweist. Dieses Element kann das beispielsweise durch Drehung zumindest einer Walze oder Rolle in einer Position verschiebbar sein, so daß es verschiedene Bereiche des Wärmetauschers abdecken kann oder freigeben kann.

Gemäß eines weiteren erfindungsgemäßen Gedankens ist es zweckmäßig, wenn das Abdeckelement zumindest eine oder eine Vielzahl von Lamellen oder Klappen aufweist, welche verdrehbar oder verschwenkbar angeordnet ist/sind.

Dabei kann es zweckmäßig sein, wenn die eine Lamelle oder Klappe oder die Vielzahl von Lamellen oder Klappen in einer Halterung angeordnet sind, wobei die Lamellen oder Klappen parallel, gleichzeitig oder relativ zu einander versetzt verdrehbar oder verschwenkbar sind.

Besonders zweckmäßig ist es, wenn das zumindest eine Abdeckelement mittels zumindest eines Aktuators ansteuerbar ist. Auch ist es zweckmäßig, wenn der zumindest eine Aktuator mittels zumindest einer Steuereinheit steuerbar ist. Dabei kann der zumindest eine Aktuator zweckmäßig ein Elektromotor sein.

Vorteilhaft ist, wenn der Wärmetauscher in dem Kühlbetriebsbereich ein Verdampfer ist und in dem Wärmepumpenbetriebsbereich ein Kondensator/Gaskühler ist.

Gemäß eines weiteren Erfindungsgedankens wird dies gelöst durch ein Verfahren zur Steuerung eines Abdeckelements gemäß Anspruch 21.

Im folgenden wird die Erfindung anhand von Ausführungsbeispielen unter Bezugnahme auf die Zeichnungen im einzelnen erläutert. In den Zeichnungen zeigen:
- Fig. 1a: eine schematische Darstellung eines Verdampfers mit einem Abdeckelement,
- Fig. 1b: eine schematische Darstellung eines Verdampfers mit einem Abdeckelement,
- Fig. 1c: eine schematische Darstellung eines Verdampfers im Schnitt,
- Fig. 1d: eine schematische Darstellung eines Verdampfers im Schnitt,
- Fig. 2a: eine schematische Ansicht auf das Abdeckelement,
- Fig. 2b: eine schematische Ansicht auf das Abdeckelement,
- Fig. 2c: eine schematische Ansicht auf das Abdeckelement,
- Fig. 2d: eine schematische Ansicht auf das Abdeckelement,
- Fig. 2e: eine schematische Ansicht auf das Abdeckelement,
- Fig. 2f: eine schematische Ansicht auf das Abdeckelement,
- Fig. 2g: eine schematische Ansicht auf das Abdeckelement,
- Fig. 2h: eine schematische Ansicht auf das Abdeckelement,
- Fig. 3: eine schematische Darstellung eines Abdeckelements,
- Fig. 4: eine schematische Darstellung eines Abdeckelements,
- Fig. 5: eine schematische Darstellung eines Abdeckelements,
- Fig. 6: ein schematisches Diagramm einer Klimaanlage.

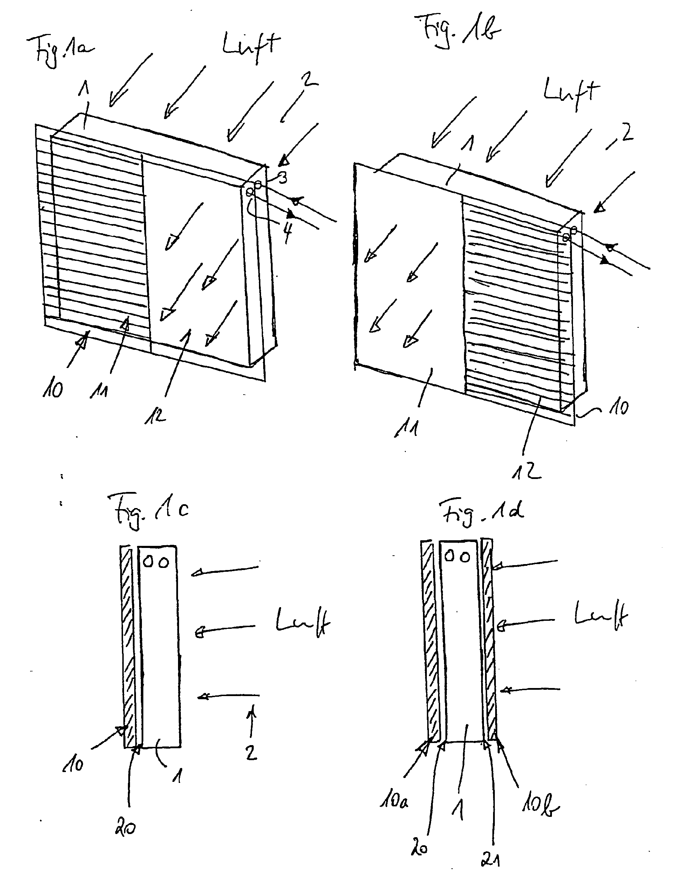

Die Figur 1a zeigt einen Verdampfer 1 in einer schematischen Darstellung mit einem Kältemitteleinlaß 3 und einem Kältemittelauslaß 4, wobei dieser Verdampfer in der Regel in einem Gehäuse einer Klimaanlage angeordnet ist und zumindest in einem Luftstrom 2 oder Teilluftstrom angeordnet ist. Die anströmende Luft trifft auf den Verdampfer und würde durch Kanäle oder Rippen hindurch strömen und dabei abgekühlt werden.

Erfindungsgemäß ist der Verdampfer 1 mit einem Abdeckelement 10 versehen, welches auf der Anströmseite und/oder der Abströmseite des Verdampfers 1 angeordnet ist und in zumindest einem ersten Betriebsbereich zumindest einen ersten Teil 11 der luftseitigen Stirnfläche des Verdampfers abdeckt und einen zweiten Teil 12 der luftseitigen Stirnfläche freigibt, wobei in einem zumindest zweiten Betriebsbereich der zumindest erste Teil 11 der Stirnfläche freigebbar ist und der zumindest zweite Teil der Stirnfläche abdeckbar ist.

Damit wird bewirkt, daß in einem ersten Betriebsbereich, bei Klimaanlagenbetrieb, die Luft 2 lediglich durch einen Teil 12 des Verdampfers tritt. In diesem Bereich des Verdampfers kann sich Kondenswasser aus der Luft ansammeln und gegebenenfalls gefrieren. Somit kann im Klimaanlagenbetrieb die von dem Verdampfer genutzte Fläche 12 beschränkt werden, wobei dadurch sich in diesem Betriebszustand das Wasser sich nur an einem Teil des Verdampfers sammeln kann.

In einem weiteren Betriebsbereich, im Wärmepumpenbetrieb, wird das Abdeckelement derart gesteuert, siehe Figur 1 b, daß die im ersten Betriebsbereich, wie beispielsweise Klimaanlagenbetrieb, abgedeckte Fläche 11 freigegeben wird und die im ersten Betriebsbereich, wie Klimaanlagenbetrieb, freigegebene Fläche 12 abgedeckt wird. Dadurch wird die Luft 2 im zweiten Betriebsbereich durch einen anderen Bereich des Verdampfers 1 geleitet, der sich im wesentlichen nicht durch mögliche Ansammlungen von Wasser oder Eis auszeichnet. Im Wärmepumpenbetrieb kann sich somit nicht oder nur sehr geringfügig oder nur sehr langsam dieses Wasser auf . den Scheiben des Fahrzeuges niederschlagen, so daß es nicht zu einer erheblichen plötzlichen Sichtbehinderung kommen kann.

Vorzugsweise kann in einem dritten Betriebsbereich sowohl der Teilbereich 11 als auch der Teilbereich 12 abdeckbar sein. Ebenfalls vorzugsweise kann in einem weiteren Betriebsbereich sowohl der Teilbereich 11 als auch der Teilbereich 12 freigebbar sein.

Die Figur 1c zeigt eine Anordnung eines Verdampfers 1 in der Luftströmung 2 im Schnitt. Dabei ist auf der abströmenden Seite 20 des Verdampfers 1 das Abdeckelement 10 angeordnet. Vorzugsweise kann das Abdeckelement 10 auch anströmenden Seite 21 des Verdampfers angeordnet sein. Gemäß Figur 1d kann ein Abdeckelement 10a sowohl auf der anströmenden Seite 21 und ein weiteres Abdeckelement 10b auf der abströmenden Seite 20 des Verdampfers angeordnet sein.

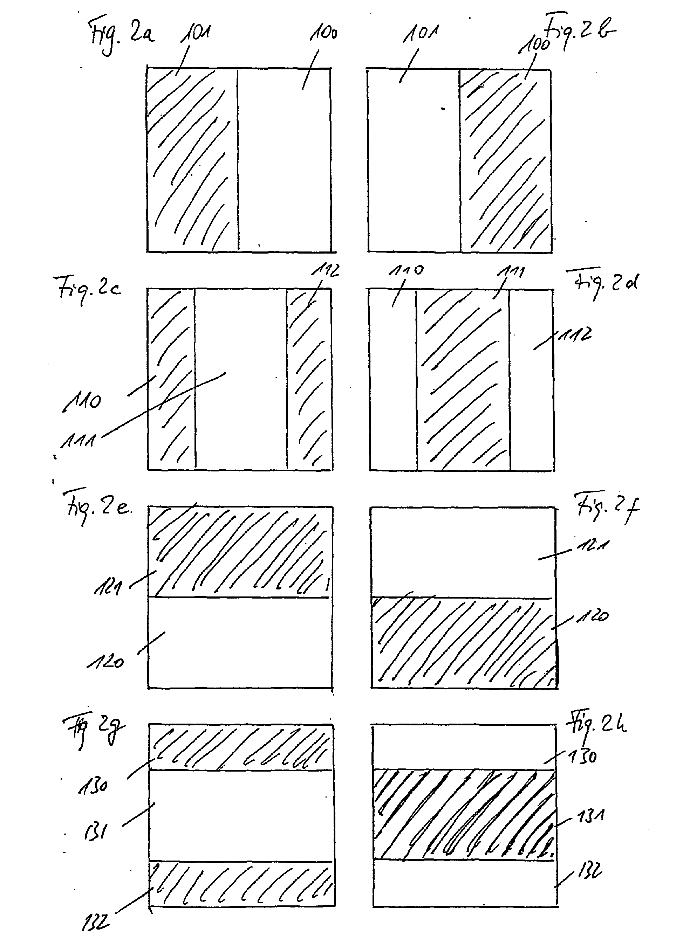

Die Figuren 2a bis 2h zeigen jeweils eine schematische Anordnung des bzw. der Abdeckelemente des Verdampfers, wobei die Figuren 2a, 2c, 2e und 2g die Darstellung in einem ersten Betriebsbereich zeigen und die Figuren 2b, 2d, 2f und 2h die Darstellung in einem zweiten Betriebsbereich zeigen.

Die Figuren 2a und 2b zeigen eine Darstellung des Abdeckelements gemäß der Figur 1a, wobei die Fläche des Verdampfers durch das Abdeckelement in zwei Bereiche 100 und 101 geteilt ist, wobei die Bereiche 100 und 101 derart neben einander liegen, daß die Trennung zwischen den Bereichen durch eine vertikale Grenze definiert ist. In einem ersten Betriebsbereich gemäß Figur 2a ist der Flächenbereich 101 abgedeckt und der Flächenbereich 100 freigegeben. In einem zweiten Betriebsbereich gemäß Figur 2b ist der Flächenbereich 100 abgedeckt und der Flächenbereich 101 freigegeben.

Die Figuren 2c und 2d zeigen eine Darstellung des Abdeckelements, wobei die Fläche des Verdampfers durch das Abdeckelement in zwei Bereiche geteilt ist, wobei der eine Bereich nicht zusammenhängend ist sondern wiederum aufgeteilt ist. Somit ergeben sich drei Teilbereiche 110, 111 und 112, wobei die Bereiche 110 und 112 einen Bereich bilden und weiterhin der Bereich 111 vorgesehen ist. Die Flächenbereiche 110, 111 und 112 sind derart nebeneinander angeordnet, daß die Trennung zwischen den Bereichen durch jeweils eine vertikale Grenze definiert ist und der Bereich 111 zwischen den Bereichen 110 und 112 liegt.

In einem ersten Betriebsbereich gemäß Figur 2c ist der Flächenbereich 110 und der Flächenbereich 112 abgedeckt und der Flächenbereich 111 freigegeben. In einem zweiten Betriebsbereich gemäß Figur 2d ist der Flächenbereich 110 und der Flächenbereich 112 frei gegeben und der Flächenbereich 111 abgedeckt.

Die Figuren 2e und 2f zeigen eine Darstellung des Abdeckelements im wesentlichen ähnlich der Figur 1a, wobei die Fläche des Verdampfers durch das Abdeckelement in zwei Bereiche 100 und 101 geteilt ist, wobei die Bereiche 100 und 101 derart neben einander liegen, daß die Trennung zwischen den Bereichen durch eine horizontale Grenze definiert ist. Diese Grenze ist somit gegenüber den Ausführungsbeispielen der Figuren 2a und 2b um 90° verdreht. In einem ersten Betriebsbereich gemäß Figur 2e ist der Flächenbereich 121 abgedeckt und der Flächenbereich 120 freigegeben. In einem zweiten Betriebsbereich gemäß Figur 2f ist der Flächenbereich 120 abgedeckt und der Flächenbereich 121 freigegeben.

Die Figuren 2g und 2h zeigen eine Darstellung des Abdeckelements, wobei die Fläche des Verdampfers durch das Abdeckelement in zwei Bereiche geteilt ist, wobei der eine Bereich nicht zusammenhängend ist sondern wiederum aufgeteilt ist. Somit ergeben sich drei Teilbereiche 130, 131 und 132, wobei die Bereiche 130 und 132 einen Bereich bilden und weiterhin der Bereich 131 vorgesehen ist. Die Flächenbereiche 130, 131 und 132 sind derart nebeneinander angeordnet, daß die Trennung zwischen den Bereichen durch jeweils eine horizontale Grenze definiert ist und der Bereich 131 zwischen den Bereichen 130 und 132 liegt.

In einem ersten Betriebsbereich gemäß Figur 2g ist der Flächenbereich 130 und der Flächenbereich 132 abgedeckt und der Flächenbereich 131 freigegeben. In einem zweiten Betriebsbereich gemäß Figur 2h ist der Flächenbereich 130 und der Flächenbereich 132 frei gegeben und der Flächenbereich 131 abgedeckt.

Bei einem Wechsel des Betriebsbereiches wird das bzw. werden die Abdekkelemente derart angesteuert, daß sie den einen oder anderen Bereich des Verdampfers freigeben oder abdecken. Diese Ansteuerung erfolgt durch eine Steuereinheit, die vorzugsweise elektronisch gesteuert ist und die Veränderung bzw. Ansteuerung der Abdeckelemente erfolgt durch zumindest einen Aktuator oder mehrere Aktuatoren.

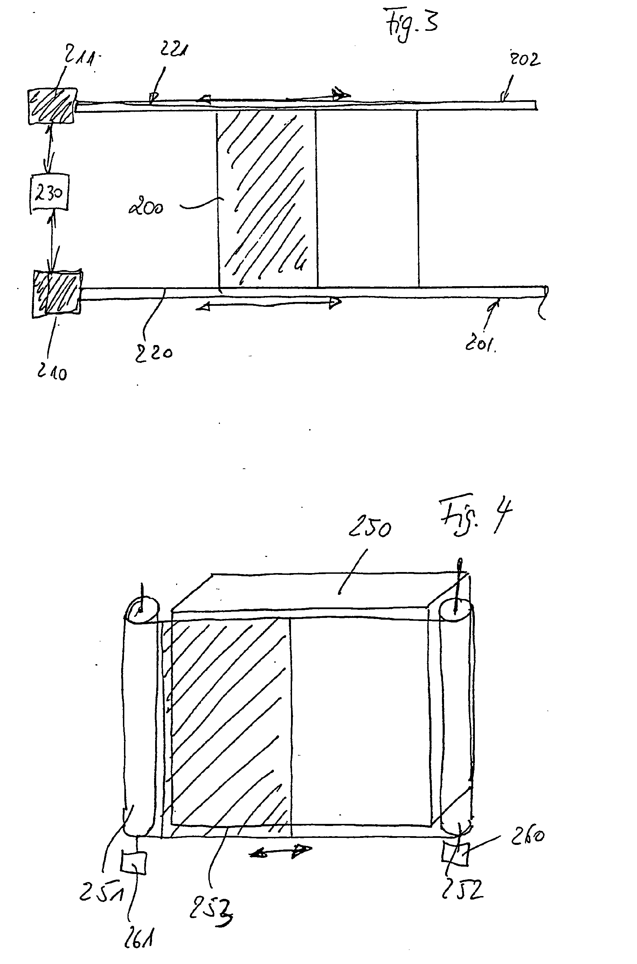

Gemäß einem Ausführungsbeispiel ist ein Abdeckelement beispielsweise gemäß Figur 2a durch einen Aktuator entlang einer Führung lateral verschiebbar angeordnet, so daß das Abdeckelement in einem ersten Betriebszustand in der einen Stellung angeordnet ist und einen ersten Teilbereich abdeckt und einen anderen zweiten Teilbereich freigibt und bei einem Wechsel des Betriebszustandes das Abdeckelement durch den Aktuator verschoben wird und das Abdeckelement in einem zweiten Betriebszustand in der einen Stellung angeordnet ist und einen ersten Teilbereich freigibt und einen anderen zweiten Teilbereich abdeckt, siehe Figur 3. Das Abdekkelement ist dabei als Abdeckflächenelement 200 vorgesehen, welches in zumindest einer Führungsschiene 201, 202 bewegbar und verschiebbar angeordnet ist. Mittels zumindest eines Aktuators 210, 211 mit einer Antriebsverbindung 220, 221 zu dem Abdeckflächenelement 200 kann das Abdeckflächenelement gezielt verlagert werden um die Teilbereiche des Verdampfers gezielt abzudecken oder frei zu geben. Der zumindest eine Aktuator 210, 211 kann dabei als elektromotorisch angetriebener Aktuator oder hydraulischer Aktuator oder als anderweitig angetriebener Aktuator ausgebildet sein, der von einer zentralen Steuereinheit 230 ansteuerbar ist.

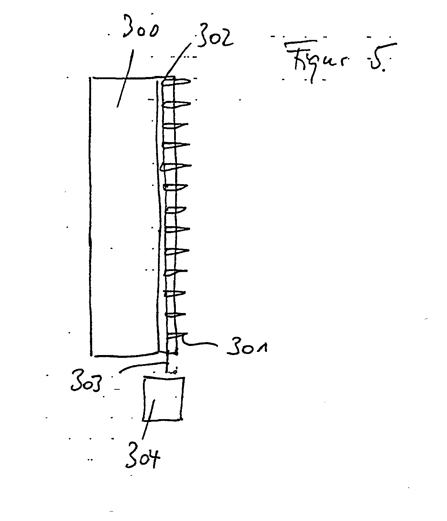

Gemäß einem weiteren Ausführungsbeispiel ist ein Abdeckelement beispielsweise gemäß Figur 2a durch einen Aktuator lateral verschiebbar angeordnet, wobei das Abdeckelement Teil einer Folie oder einem Film ist, die/der durch Auf- und Abwicklung auf Walzen 251, 252 lateral verlagerbar ist, so daß das Abdeckelement in einem ersten Betriebszustand in der einen Stellung angeordnet ist und einen ersten Teilbereich abdeckt und einen anderen zweiten Teilbereich freigibt und bei einem Wechsel des Betriebszustandes das Abdeckelement durch den Aktuator verschoben wird und das Abdeckelement in einem zweiten Betriebszustand in der einen Stellung angeordnet ist und einen ersten Teilbereich freigibt und einen anderen zweiten Teilbereich abdeckt, siehe Figur 4. Das Abdeckelement ist dabei als Abdeckflächenelement Teil einer aufrollbaren Folie oder Vorhangs vorgesehen, wobei die Folie oder der Film oder der Vorhang durch Verdrehung von Walzen 251, 252 auf- und abwickelbar ist, so daß das Abdeckelement lateral vor und/oder hinter dem Verdampfer verlagerbar ist und Teile des Verdampfers freigibt oder abdeckt. Mittels zumindest eines Aktuators 260, 261 mit einer Antriebsverbindung zu den Rollen 251, 252 kann das Abdeckflächenelement 253 gezielt verlagert werden um die Teilbereiche des Verdampfers gezielt abzudecken oder frei zu geben. Der zumindest eine Aktuator 251, 252 kann dabei als elektromotorisch angetriebener Aktuator oder hydraulischer Aktuator oder als anderweitig angetriebener Aktuator ausgebildet sein, der/die von einer zentralen Steuereinheit ansteuerbar ist/sind.

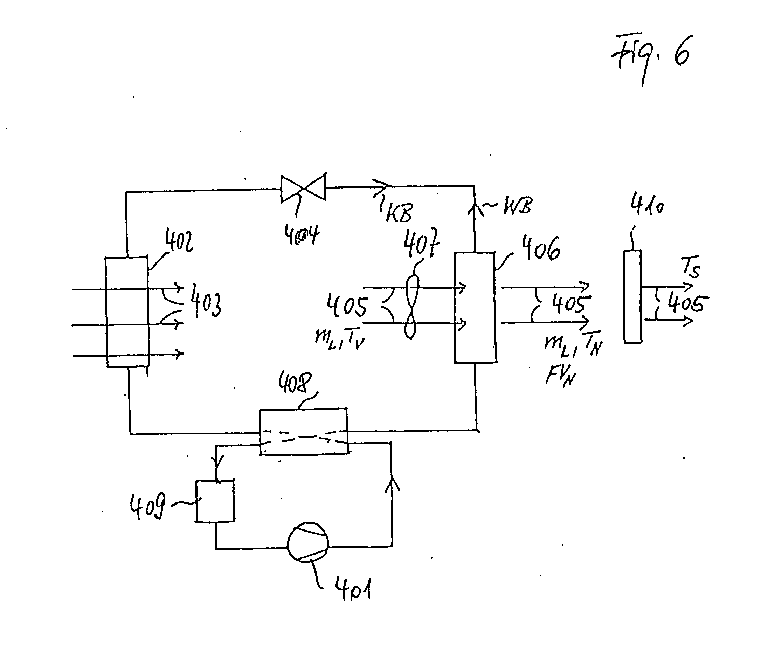

Gemäß einem weiteren Ausführungsbeispiel gemäß Figur 5 können vor den jeweiligen Teilbereichen des Verdampfers 300 der Klimaanlage Lamellen 301 in einer Halterung 302 angeordnet sein, die durch einen Verschwenkmechanismus 303 mittels eines Aktuators 304 verschwenkbar sind. Dadurch kann jeder Teil des Verdampfers durch die Ansteuerung des Aktuators gezielt abgedeckt oder frei gegeben werden, je nach dem, ob die Lamellen so verstellt sind, daß die den Teilbereich abdecken oder ob sie so aufgestellt sind, daß sie eine Luftströmung durch die zwischen den Lamellen vorliegenden Freiräume erlauben.

Die Figur 6 zeigt schematisch eine Klimaanlage eines Kraftfahrzeuges, die einen mit einem Kältemittel, beispielsweise CO₂ oder auch andere, arbeitenden Kältemittelkreislauf aufweist. Der Kältemittelkreislauf ist so ausgelegt, daß die Klimaanlage wahlweise im Kühlbetriebsbereich und im Wärmepumpenbereich betreibbar ist. Die hauptsächlichen Komponenten sind ein Kompressor 401, ein außenliegender, d.h. von einem Außenluftstrom 403 angeströmter Wärmetauscher 402, ein Expansionselement 404, ein innenliegeder, d.h. von einem in einen Fahrzeuginnenraum geleiteter Klimatisierungsluftstrom 405 angeströmter Wärmetauscher 406 mit zugehörigem Luftfördergebläse 407, ein Ventil 408 , wie 4/2-Wegeventil, zur Umschaltung der Richtung des Kältemittelstroms beim Wechsel zwischen Kühl- und Wärmepumpenbetrieb, ein Sammler 409 und ein in üblicher, in nicht näher gezeigter Weise von einem Motorkühlmittel, z.B. Wasser, durchströmter luftbeheizender Wärmetauscher 410.

Im Kühlbetrieb strömt das Kältemittel in der durch einen zugehörigen Pfeil KB angegebenen Richtung. Im Wärmepumpenbetrieb in der dazu entgegengesetzten, durch einen zugehörigen Pfeil WB gekennzeichneten Richtung. Der außenliegende Wärmetauscher 402 fungiert im Kühlbetrieb als Kondensator/Gaskühler und im Wärmepumpenbetrieb als Verdampfer. Umgekehrt fungiert der innenliegende Wärmetauscher 406 im Kühlbetrieb als Verdampfer und im Wärmepumpenbetrieb als Kondensator/Gaskühler. Somit kühlt er im Kühlbetrieb den ihm im Frischluftbetrieb durch das Luftfördergebläse 407 von außen und im Umluftbetrieb vom Fahrzeuginnenraum zugeführten Luftstrom 405 ab, während er ihn im Wärmepumpenbetrieb erwärmt. Der vom innenliegenden Wärmetauscher 406 klimatisierte Luftstrom 405 wird über nicht gezeigte Luftkanäle, Klappen und Luftaustrittsdüsen in den Fahrzeuginnenraum geleitet, wobei er je nach Bedarf und Systemauslegung über weitere Klimatisierungskomponenten geführt werden kann, insbesondere einen Heizkörper.

Im Kühlbetrieb kommt es an dem als Verdampfer arbeitenden, innenliegenden Wärmeübertrager 406 zur bekannten Kondenswasserabscheidung. Da das abgeschiedene Kondenswasser bei einer Umschaltung in den Wärmepumpenbereich durch die Aufheizung des innenliegenden Wärmetauschers 406 in den darüber geführten Luftstrom 405 verdunstet, tritt unter ungünstigen Bedingungen Scheibenbeschlagneigung auf, in dem sich das vom Luftstrom aufgenommene Wasser an der Innenseite insbesondere der Windschutzscheibe des Fahrzeuges niederschlägt.

## Patentansprüche

1. Anordnung mit einem Wärmetauscher *(1, 300),* insbesondere Verdampfer für eine Klimaanlage für ein Kraftfahrzeug, wobei zumindest ein Abdeckelement *(10, 200, 301)* an- und/oder abströmseitig des Wärmetauschers vorgesehen ist, welches *derart gesteuert* ist, dass es in zumindest einem ersten Betriebsbereich, einem *Klimaanlagenbetrieb*, einen ersten Teil *(11)* einer Stirnfläche des Wärmetauschers abdeckt und einen zweiten Teil *(12)* der Stirnfläche des Wärmetauschers freigibt, *und* in einem zweiten Betriebsbereich, *einem Wärmepumpenbetrieb*, den *im ersten Betriebsbereich abgedeckten* ersten Teil *(11)* der Stirnfläche des Wärmetauschers freigibt und den *im ersten Betriebsbereich freigegebenen* zweiten Teil *(12)* der Stirnfläche des Wärmetauschers abdeckt.

2. Anordnung nach Anspruch 1, **dadurch gekennzeichnet, daß** in zumindest einem weiteren Betriebsbereich die Stirnfläche des Wärmetauschers (1, 300) durch das zumindest eine Abdeckelement (10, 200, 301) im wesentlichen vollständig freigebbar ist.

3. Anordnung nach Anspruch 1 oder 2, **dadurch gekennzeichnet, daß** in zumindest einem weiteren Betriebsbereich die Stirnfläche des Wärmetauschers (1, 300) durch das zumindest eine Abdeckelement (10, 200, 301) im wesentlichen vollständig abdeckbar ist.

4. Anordnung nach einem der vorhergehenden Ansprüche, **dadurch gekennzeichnet, daß** die Stirnfläche des Wärmetauschers (1, 300) im wesentlichen in zumindest zwei Bereiche (11, 12, 100, 101, 120, 130) teilbar ist und zumindest ein Abdeckelement (10) in Abhängigkeit des Betriebsbereiches zumindest einen Bereich abdeckt oder freigibt.

5. Anordnung nach einem der vorhergehenden Ansprüche, **dadurch gekennzeichnet, daß** die Stirnfläche des Wärmetauschers (1, 300) in zumindest zwei Bereiche (11, 12, 100, 101, 120, 130) Teilbar ist, wobei eine Grenze bzw. Grenzbereich zwischen den Teilbereichen vertikal oder horizontal zu einer Seitenkante des Wärmetauschers verläuft.

6. Anordnung nach Anspruch 5, **dadurch gekennzeichnet, daß** zwei Teilbereiche (11, 12, 100, 101, 120, 130) ausgebildet sind, die nebeneinander liegen und durch eine horizontale oder vertikale Grenze bzw. Grenzbereich geteilt sind.

7. Anordnung nach Anspruch 6, **dadurch gekennzeichnet, daß** die beiden Teilbereiche (11, 12, 100, 101, 120, 130) hinsichtlich ihrer Fläche im wesentlichen gleich groß sind.

8. Anordnung nach Anspruch 6, **dadurch gekennzeichnet, daß** einer der Teilbereiche (11, 12, 100, 101, 120, 130) eine Größe im Bereich von 20 % bis 80%, vorzugsweise 30% bis 50% der Stirnfläche aufweist.

9. Anordnung nach einem der vorhergehenden Ansprüche, **dadurch gekennzeichnet, daß** 3 Teilbereiche (110, 111, 112, 130, 131, 132) gebildet werden, wobei zwei Teilbereiche (110, 112, 130, 132) im wesentlichen gleichzeitig abdeckbar oder freigebbar sind.

10. Anordnung nach einem der vorhergehenden Ansprüche, **dadurch gekennzeichnet, daß** das Abdeckelement eine mittels einer Führung (201, 202) ver-schiebbares Element (200) aufweist und/oder ein folienartiges oder filmartiges Abdeckelement und/oder eine Rolljalousie (253) oder eine Anzahl von verdrehbaren Lamellen (301) aufweist.

11. Anordnung nach Anspruch 10, **dadurch gekennzeichnet, daß** das Abdekkelement ein in einer Führung (201, 202) verschiebbares Element (200) aufweist, welches eine Fläche aufweist, mittels welchem zumindest ein Teil des Wärmetauschers abdeckbar ist.

12. Anordnung nach Anspruch 11, **dadurch gekennzeichnet, daß** das Element ein ebenes Flächenelement (100, 200) ist.

13. Anordnung nach Anspruch 11 oder 12 **dadurch gekennzeichnet, daß** das Element in einer Führungsschiene (201, 202) lateral verschiebbares Flächenelement (200) aufweist.

14. Anordnung nach Anspruch 10, **dadurch gekennzeichnet, daß** das Abdekkelement ein mittels oder auf einem Roll- oder Walzenmechanismus (251) aufrollbares, aufwickelbares oder transportierbares oder verlagerbares folenartiges oder filmartiges Element (253) aufweist.

15. Anordnung nach Anspruch 10, **dadurch gekennzeichnet, daß** das Abdekkelement zumindest eine oder eine Vielzahl von Lamellen (301) aufweist, welche verdrehbar oder verschwenkbar angeordnet ist.

16. Anordnung nach einem der vorhergehenden Ansprüche, **dadurch gekennzeichnet, daß** die eine oder die Vielzahl von Lamellen (301) in einer Halterung (302) angeordnet sind, wobei die Lamellen (301) parallel oder relativ zu einander verdrehbar oder verschwenkbar sind.

17. Anordnung nach einem der Ansprüche 10 bis 16, **dadurch gekennzeichnet, daß** das zumindest eine Abdeckelement (200, 253, 301) mittels zumindest eines Aktuators (230, 260, 261, 304) ansteuerbar ist.

18. Anordnung nach Anspruch 17, **dadurch gekennzeichnet, daß** der zumindest eine Aktuator (230, 260, 261, 304) mittels zumindest einer Steuereinheit steuerbar ist.

19. Anordnung nach einem der vorhergehenden Ansprüche, **dadurch gekennzeichnet, daß** der Wärmetauscher (1, 300) in dem Klimaanlagenbetriebsbereich als Verdampfer und in dem Wärmepumpenbetriebsbereich als Kondensator/Gaskühler, arbeitet.

20. Verfahren zur Steuerung einer *Anordnung*, insbesondere nach einem der vorhergehenden Ansprüche, mit einem Wärmetauscher *(1, 300),* zumindest einem Abdeckelement *(10, 200, 301),* zumindest einem Aktuator *(230, 260, 261, 304)* und zumindest einer *Steuereinheit,* wobei die zumindest eine Steuereinheit mittels des zumindest einen Aktuators das zumindest eine Abdeckelement derart ansteuert, daß es *in zumindest einem ersten Betriebsbereich, einem Klimaanlagenbetrieb*, zumindest einen *ersten* Teilbereich *(11)* einer Stirnfläche *des* Wärmetauschers abdeck*t* und *einen zweiten Teilbereich (12) der Stirnfläche des Wärmetauschers freigibt und* in zumindest einem zweiten Betriebsbereich, *einem Wärmepumpenbetrieb, den im ersten Betriebsbereich abgedeckten ersten Teilbereich (11) der Stirnfläche des Wärmetauschers freigibt und den im ersten Betriebsbereich freigegebenen zweiten Teilbereich (12) der Stirnfläche des Wärmetauschers abdeckt.*

## Claims

1. Arrangement with a heat exchanger (1, 300), in particular an evaporator for an air conditioning system for a motor vehicle, wherein at least one cover element (10, 200, 301) is provided on the inlet and/or outlet side of the heat exchanger, which is controlled such that, in at least one first operating mode as an air conditioning system, it covers a first part (11) of an end face of the heat exchanger and uncovers a second part (12) of the end face of the heat exchanger, and, in a second operating mode as a heat pump, it uncovers the first part (11) of the end face of the heat exchanger covered in the first operating mode and covers the second part (12) of the end face of the heat exchanger uncovered in the first operating mode.

2. Arrangement according to claim 1, **characterised in that**, in at least one further operating mode, the end face of the heat exchanger (1, 300) can essentially be uncovered completely by the at least one cover element (10, 200, 301).

3. Arrangement according to claim 1 or 2, **characterised in that**, in at least one further operating mode, the end face of the heat exchanger (1, 300) can essentially be covered completely by the at least one cover element (10, 200, 301).

4. Arrangement according to any of the preceding claims, **characterised in that** the end face of the heat exchanger (1, 300) is essentially divisible into at least two areas (11, 12, 100, 101, 120, 130) and at least one cover element (10) covers or uncovers at least one area in dependence on operating mode.

5. Arrangement according to any of the preceding claims, **characterised in that** the end face of the heat exchanger (1, 300) is essentially divisible into at least two areas (11, 12, 100, 101, 120, 130), a boundary or boundary area between the two subdivisions extending vertically or horizontally towards a lateral edge of the heat exchanger.

6. Arrangement according to claim 5, **characterised in that** two subdivisions (11, 12, 100, 101, 120, 130) located adjacent to one another and divided by a horizontal or vertical boundary or boundary area are provided.

7. Arrangement according to claim 6, **characterised in that** the two subdivisions (11, 12, 100, 101, 120, 130) have substantially equal surface areas.

8. Arrangement according to claim 6, **characterised in that** one of the two subdivisions (11, 12, 100, 101, 120, 130) has a size in the range of 20% to 80%, preferably 30% to 50%, of the end face.

9. Arrangement according to any of the preceding claims, **characterised in that** 3 subdivisions (110, 111, 112, 130, 131, 132) are formed, two subdivisions (110, 112, 130, 132) being covered or uncovered at substantially the same time.

10. Arrangement according to any of the preceding claims, **characterised in that** the cover element comprises an element (200) movable by means of guide (201, 202) and/or a foil- or film-like cover element and/or a louvre (253) or a number of rotatable slats (301).

11. Arrangement according to claim 10, **characterised in that** the cover element comprises an element (200) movable by means of a guide (201, 202), which has a surface by means of which at least a part of the heat exchanger can be covered.

12. Arrangement according to claim 11, **characterised in that** the element is a flat two-dimensional element (100, 200).

13. Arrangement according to claim 11 or 12, **characterised in that** the element comprises a two-dimensional element (200) movable in a guide rail (201, 202).

14. Arrangement according to claim 10, **characterised in that** the cover element comprises a foil- or film-like element (253), which can be unrolled, rolled up, transported or moved by means of or on a reel or roll mechanism (251).

15. Arrangement according to claim 10, **characterised in that** the cover element comprises at least one slat or a plurality of slats (301) arranged rotatably or pivotably.

16. Arrangement according to any of the preceding claims, **characterised in that** the single slat or the plurality of slats (301) is located in a holder (302), the slats (301) being rotatable or pivotable parallel or relative to one another.

17. Arrangement according to any of claims 10 to 16, **characterised in that** the at least one cover element (200, 253, 301) can be driven by means of at least one actuator (230, 260, 261, 304).

18. Arrangement according to claim 17, **characterised in that** the at least one actuator (230, 260, 261, 304) can be controlled by means of a control unit.

19. Arrangement according to any of the preceding claims, **characterised in that** the heat exchanger (1, 300) acts as an evaporator in the air conditioning mode and as a condenser/gas cooler in the heat pump mode.

20. Method for the control of an arrangement, in particular according to any of the preceding claims, with a heat exchanger (1,300), at least one cover element (10, 200, 301), at least one actuator (230, 260, 261, 304) and at least one control unit, wherein the at least one control unit drives the at least one cover element by means of the at least one actuator, so that it covers, in at least one first operating mode as an air conditioning system, at least a first subdivision (11) of an end face of the heat exchanger and uncovers a second subdivision (12) of the end face of the heat exchanger, and uncovers, in at least one second operating mode as a heat pump, the first subdivision (11) of the end face of the heat exchanger covered in the first operating mode and covers the second subdivision (12) of the end face of the heat exchanger uncovered in the first operating mode.

## Revendications

1. Dispositif comprenant un échangeur de chaleur (1, 300), en particulier un évaporateur pour un système de climatisation pour un véhicule automobile, où il est prévu, côté entrée et/ou côté sortie de l'échangeur de chaleur, au moins un élément de recouvrement (10, 200, 301) qui est commandé de manière telle que, dans au moins une première plage de fonctionnement, à savoir un fonctionnement du système de climatisation, il recouvre une première partie (11) d'une surface frontale de l'échangeur de chaleur et dégage une deuxième partie (12) de la surface frontale de l'échangeur de chaleur et, dans une deuxième plage de fonctionnement, à savoir un fonctionnement de la pompe à chaleur, il dégage la première partie (11) de la surface frontale de l'échangeur de chaleur, recouverte pendant la première plage de fonctionnement, et recouvre la deuxième partie (12) de la surface frontale de l'échangeur de chaleur, dégagée pendant la première plage de fonctionnement.

2. Dispositif selon la revendication 1, **caractérisé en ce que**, dans au moins une autre plage de fonctionnement, la surface frontale de l'échangeur de chaleur (1, 300) peut être dégagée, pratiquement de façon complète, par l'élément de recouvrement (10, 200, 301) au moins au nombre de un.

3. Dispositif selon la revendication 1 ou 2, **caractérisé en ce que**, dans au moins une autre plage de fonctionnement, la surface frontale de l'échangeur de chaleur (1, 300) peut être recouverte, pratiquement de façon complète, par l'élément de recouvrement (10, 200, 301) au moins au nombre de un.

4. Dispositif selon l'une quelconque des revendications précédentes, **caractérisé en ce que** la surface frontale de l'échangeur de chaleur (1, 300) peut être divisée pratiquement en au moins deux zones (11, 12, 100, 101, 120, 130), et au moins un élément de recouvrement (10) recouvre ou dégage au moins une zone, en fonction de la plage de fonctionnement.

5. Dispositif selon l'une quelconque des revendications précédentes, **caractérisé en ce que** la surface frontale de l'échangeur de chaleur (1, 300) peut être divisée en au moins deux zones (11, 12, 100, 101, 120, 130), où une limite ou une zone limite s'étend verticalement entre les zones partielles ou bien horizontalement par rapport à un bord latéral de l'échangeur de chaleur.

6. Dispositif selon la revendication 5, **caractérisé en ce que** sont formées deux zones partielles (11, 12, 100, 101, 120, 130) qui sont placées l'une à côté de l'autre et sont divisées par une limite ou une zone limite horizontale ou verticale.

7. Dispositif selon la revendication 6, **caractérisé en ce que** les deux zones partielles (11, 12, 100, 101, 120, 130) sont, concernant leur surface, sensiblement de la même dimension.

8. Dispositif selon la revendication 6, **caractérisé en ce que** l'une des zones partielles (11, 12, 100, 101, 120, 130) présente une dimension dans la plage comprise entre 20 % et 80 %, de préférence entre 30 % et 50 % de la surface frontale.

9. Dispositif selon l'une quelconque des revendications précédentes, **caractérisé en ce que** trois zones partielles (110, 111, 112, 130, 131, 132) sont formées, où deux zones partielles (110, 112, 130, 132) peuvent être recouvertes ou dégagées pratiquement en même temps.

10. Dispositif selon l'une quelconque des revendications précédentes, **caractérisé en ce que** l'élément de recouvrement présente un élément (200) mobile grâce à un guide (201, 202) et/ou présente un élément de recouvrement en forme de feuille ou de film et/ou une jalousie enroulable (253) ou un certain nombre de lamelles (301) orientables.

11. Dispositif selon la revendication 10, **caractérisé en ce que** l'élément de recouvrement présente un élément (200) mobile dans un guide (201, 202), élément qui présente une surface au moyen de laquelle peut être recouverte au moins une partie de l'échangeur de chaleur.

12. Dispositif selon la a revendication 11, **caractérisé en ce que** l'élément est un élément de surface (100, 200) plan.

13. Dispositif selon la revendication 11 ou 12, **caractérisé en ce que** l'élément présente un élément de surface (200) mobile latéralement dans un rail de guidage (201, 202).

14. Dispositif selon la revendication 10, **caractérisé en ce que** l'élément de recouvrement présente un élément (253) en forme de feuille ou de film pouvant être déroulé, enroulé ou transporté ou déplacé au moyen d'un ou sur un mécanisme d'enroulement ou à rouleau (251).

15. Dispositif selon la revendication 10, **caractérisé en ce que** l'élément de recouvrement présente au moins une lamelle ou une multiplicité de lamelles (301) qui sont disposées de façon orientable ou pivotante.

16. Dispositif selon l'une quelconque des revendications précédentes, **caractérisé en ce que** l'une des lamelles ou bien la multiplicité de lamelles (301) sont disposées dans une fixation (302), où les lamelles (301) sont parallèles entre elles ou bien orientables ou pivotantes les unes par rapport aux autres.

17. Dispositif selon l'une quelconque des revendications 10 à 16, **caractérisé en ce que** l'élément de recouvrement (200, 253, 301) au moins au nombre de un peut être piloté au moyen au moins d'un actionneur (230, 260, 261, 304).

18. Dispositif selon la revendication 17, **caractérisé en ce que** l'actionneur (230, 260, 261, 304) au moins au nombre de un peut être commandé par au moins un organe de commande.

19. Dispositif selon l'une quelconque des revendications précédentes, **caractérisé en ce que** l'échangeur de chaleur (1, 300), dans la plage de fonctionnement du système de climatisation, fonctionne comme un évaporateur et, dans la plage de fonctionnement de pompe à chaleur, comme un condenseur / un refroidisseur de gaz.

20. Procédé de commande d'un dispositif, en particulier selon l'une quelconque des revendications précédentes, comprenant un échangeur de chaleur (1, 300), au moins un élément de recouvrement (10, 200, 301), au moins un actionneur (230, 260, 261, 304) et au moins un organe de commande, où l'organe de commande au moins au nombre de un, à l'aide de l'actionneur au moins au nombre de un, pilote l'élément de recouvrement au moins au nombre de un, de manière telle que, dans au moins une première plage de fonctionnement, à savoir un fonctionnement du système de climatisation, ledit élément de recouvrement recouvre au moins une première zone partielle (11) d'une surface frontale de l'échangeur de chaleur et dégage une deuxième zone partielle (12) de la surface frontale de l'échangeur de chaleur et, dans au moins une deuxième plage de fonctionnement, à savoir un fonctionnement de la pompe à chaleur, il dégage la première zone partielle (11) de la surface frontale de l'échangeur de chaleur, recouverte pendant la première plage de fonctionnement, et recouvre la deuxième zone partielle (12) de la surface frontale de l'échangeur de chaleur, dégagée pendant la première plage de fonctionnement.
